Europäisches Patentamt

European Patent Office

Office européen des brevets

(11) Veröffentlichungsnummer: **0 254 102**
**A2**

(12) **EUROPÄISCHE PATENTANMELDUNG**

(21) Anmeldenummer: 87109575.8

(22) Anmeldetag: 03.07.87

(51) Int. Cl.⁴: **G01M 15/00 , G01M 13/02**

(30) Priorität: **12.07.86 DE 3623675**

(43) Veröffentlichungstag der Anmeldung:
**27.01.88 Patentblatt 88/04**

(84) Benannte Vertragsstaaten:
**AT BE CH DE ES FR GB GR IT LI LU NL SE**

(71) Anmelder: **Weinlich, Leopold**
**Industriestrasse 6**
**D-6838 Reilingen(DE)**

(72) Erfinder: **Weinlich, Leopold**
**Industriestrasse 6**
**D-6838 Reilingen(DE)**

(74) Vertreter: **Rüger, Rudolf, Dr.-Ing. et al**
**Webergasse 3 Postfach 348**
**D-7300 Esslingen/Neckar(DE)**

(54) **Prüfeinrichtung zum Prüfen von Motoren.**

(57) Eine Prüfeinrichtung (1) zum Prüfen von Motoren (2), insbesondere von Verbrennungsmotoren, und zum Ermitteln von deren Betriebsverhalten enthält, um den Prüfling (2) wahlweise belasten oder antreiben zu können, eine an ein Stromnetz anschließbare und wahlweise sowohl im Generator-als auch im Motorbetrieb betreibbare elektrische Maschine (6) sowie ein im Übersetzungsverhältnis verstellbares Getriebe (3), dessen Eingangswelle (23) mit einer Ausgangswelle (7) des Prüflings (2) und dessen Ausgangswelle (44) mit der Ankerwelle der elektrischen Maschine (6) gekuppelt ist, um die elektrische Maschine (6) unabhängig von der Drehzahl des Prüflings (2) immer im günstigsten Bereich betreiben zu können. Eine Steuereinrichtung (32) dient der Steuerung des Übersetzungsverhältnisses des Betriebes (3) in Abhängigkeit von der Lastsituation des Prüflings (2), während eine Drehmomentmeßeinrichtung (28) der Ermittlung des von dem Prüfling (2) an der Ausgangswelle (7) abgegebenen oder aufgenommenen Drehmomentes dient.

Fig.1

EP 0 254 102 A2

## Prüfeinrichtung zum Prüfen von Motoren

Die Erfindung betrifft eine Prüfeinrichtung zum Prüfen von umlaufenden Kraft-und Arbeitsmaschinen sowie Teilen davon wie Motoren, insbesondere Verbrennungsmotoren, und zum Ermitteln von deren Betriebsverhalten.

Beispielsweise in der DE-OS 2 947 696 ist ein Bremsdynamometer zum Aufnehmen der Leistungskennwerte eines Prüflings beschrieben. Dieses Bremsdynamometer enthält eine pendelnd aufgehängte Wirbelstrombremse, deren Rotor mit der Ausgangswelle des Prüflings gekuppelt ist. Durch Messen der Auslenkung bzw. Auslenkkraft der pendelnd gelagerten Wirbelstrombremse wird das Moment gemessen, das von dem Prüfling an die Wirbelstrombremse abgegeben wird.

Mit einem solchermaßen aufgebauten Bremsdynamometer lassen sich allerdings nur Lastkennlinien für den Prüfling aufnehmen, d.h. Betriebssituationen simulieren, bei denen der Prüfling im tatsächlichen Betrieb an die ihm nachgeordneten Antriebsorgane Leistung abgibt. Wenn der Prüfling ein Verbrennungsmotor für einen PKW ist, entspricht diese Prüfsituation beispielsweise der Fahrt auf einer Steigung oder der Fahrt mit hoher Geschwindigkeit. Andere Betriebssituationen, wie der Schiebelauf, der bei einem PKW beispielsweise beim Bergabfahren auftritt oder der kontinuierliche Wechsel zwischen Ziehen und Schieben, was einem Fahren in der Ebene mit geringer Geschwindigkeit entspricht, lassen sich mit dem bekannten Bremsdynamometer nicht erfassen. Die letztere Prüfung ist auch wichtig zur Bestimmung des Abgasverhaltens.

Schließlich ist es bei dem bekannten Bremsdynamometer unzweckmäßig, daß die gesamte von dem Prüfling abgegebene Leistung in der Wirbelstrombremse in Wärme umgewandelt wird. Dies erfordert einerseits entsprechende Kühleinrichtungen und vernichtet andererseits in unwirtschaftlicher Weise Primärenergie. Dies ist solange tolerabel, wie die Leistung des Prüflings verhältnismäßig niedrig ist bzw. nur wenige Prüfstände in Betrieb sind. Sobald die Leistung des Prüflings in den Bereich von mehreren Kilowatt kommt und auch gleichzeitig viele Prüfstände betrieben werden, geben die Prüflinge eine erhebliche Menge an Primärenergie ab, die einer zweckmäßigen Nutzung zugeführt werden sollte. Wenn dies gelingt, erübrigen sich außerdem umfangreiche Kühleinrichtungen, um die erzeugte Energie nicht nutzlos in Wärme umzusetzen.

Ausgehend hiervon liegt der Erfindung die Aufgabe zugrunde, eine Prüfeinrichtung zum Prüfen von Motoren zu schaffen, die sowohl ein Belasten als auch ein Antreiben des Prüflings gestattet und die es auf einfache Weise ermöglicht, die bei treibendem Prüfling an die Prüfeinrichtung abgegebene Energie in das Stromnetz zurückzuspeisen.

Erfindungsgemäß wird diese Aufgabe durch eine Prüfeinrichtung mit den Merkmalen des Anspruchs 1 gelöst.

Durch die Verwendung eines Elektromotors in der Prüfeinrichtung, der auch im Generatorbetrieb betreibbar ist, kann wahlweise, je nach Betriebszustand des Motors, von dem an das Netz angeschlossenen Motor der Prüfling angetrieben werden, was einem Schiebelaut eines Kraftfahrzeuges entspricht oder umgekehrt kann der in der Prüfeinrichtung angeordnete Motor den Prüfling belasten, wobei dann der Motor als Generator arbeitet und die von dem Prüfling gelieferte Energie in Form von elektrischem Strom nutzvoll in das Stromnetz einspeist.

Das zwischen dem Motor und dem Prüfling vorgesehene, im Übersetzungsverhältnis verstellbare Getriebe sorgt dabei dafür, daß der Elektromotor in dem für die Energieumwandlung jeweils günstigsten Drehzahlbereich betrieben werden kann. Außerdem kann unabhängig von der Drehzahl des Prüflings die elektrische Maschine ohne Verstellung ihrer Drehzahl-Drehmoment-Kennlinie betrieben werden. Zweckmäßigerweise ist deswegen das vorgeschaltete Getriebe zumindest in einem Übersetzungs bereich stufenlos regelbar. Außerdem gestattet das Getriebe die Verwendung einer Drehfeldmaschine, beispielsweise einer Synchron-oder einer Asynchronmaschine, die bekanntlich mit bzw. in der Nähe der Synchrondrehzahl arbeiten müssen, und zwar sowohl im Motor-als auch im Generatorbetrieb, während der Prüfling mit von dieser Synchrondrehzahl abweichenden Drehzahlen arbeitet.

Als Getriebe kann bevorzugt ein hydrostatisches Getriebe Verwendung finden, das den Vorteil eines sehr großen Verstellbereiches hat und damit leicht eine große Drehzahlvariation zwischen der Eingangs-und der Ausgangswelle gestattet. Insbesondere hat das hydrostatische Getriebe den Vorteil, daß sich das Übersetzungsverhältnis so weit verstellen läßt, bis eine der Wellen des Getriebes zum Stillstand gekommen ist, während die andere Welle weiterhin umläuft. Hierdurch ist es ohne weitere Maßnahmen möglich, mit Hilfe des Elektromotors aus der Prüfeinrichtung den Prüfling anzulassen, was sowohl bei Verbrennungsmotoren als Prüflingen als auch bei großen Elektromotoren als Prüflingen hilfreich ist, weil im einen Falle kein separater Anlasser benötigt wird und im anderen Falle das Anlassen des Prüflings zu keinen Stromspitzen im Netz führt.

Umgekehrt kann auch mit dem Prüfling der in der Prüfeinrichtung vorhandene Elektromotor angelassen werden, was insbesondere bei großen Leistungen zweckmäßig ist, da sonst in der Prüfeinrichtung zusätzliche Vorkehrungen getroffen werden müssen, um ohne übermäßige Netzbelastung den Elektromotor anlassen zu können.

Wegen der Schwierigkeiten, die beim Anlassen großer Elektromotoren auftreten, ist es auch günstig, diesen Elektromotor in der Prüfeinrichtung durchlaufen zu lassen, wenn der Prüfling für kurze Wartungs-und Einstellarbeiten stillgesetzt wird. Um hier gefahrlos an dem Prüfling arbeiten zu können, ist zweckmäßigerweise im Strang zwischen der elektrischen Maschine und dem Prüfling eine Kupplung vorgesehen. Diese Kupplung kann auch als schlupfaufnehmende Kupplung ausgeführt sein, um bei Getrieben, bei denen das Übersetzungsverhältnis nicht von null an verstellbar ist, ein allmähliches Einkuppeln zu erreichen.

Die Drehmomentmessung wird sehr genau und einfach, wenn die Drehmomentmeßeinrichtung eine schwenkbar gelagerte Halterung aufweist, die elastisch in ihre Nullage vorgespannt ist und deren Schwenkachse im wesentlichen parallel zu der Ausgangswelle des Prüflings verläuft, wobei in der Halterung zumindest der mit der Ausgangswelle unmittelbar gekuppelte Teil des Getriebes angeordnet ist, während eine eine Auslenkung oder eine Auslenkkraft der Halterung messende Meßeinrichtung vorgesehen ist. Infolge dieser Anordnung kann ein großer Teil, insbesondere der gegebenenfalls schwere Elektromotor, ortsfest aufgestellt werden, während ein volumen-und massenmäßig kleiner Teil zur Drehmomentmessung herangezogen wird. Die Halterung kann dementsprechend klein ausgeführt und leichgängig gelagert werden, was erheblich zur Meßgenauigkeit beiträgt. Andererseits werden durch die Masse der Halterung und der darin angeordneten Teile periodische hochfrequente Drehmomentschwankungen ausgemittelt.

Bei Verwendung eines hydrostatischen Getriebes ist in der Halterung der mit dem Prüfling gekuppelte Pumpenmotor angeordnet.

Die Verwendung eines an einem Wechselstromnetz betriebenen Wechselstrommotors in der Prüfeinrichtung hat den großen Vorteil, daß im Generatorbetrieb dieser Maschinen an ihren Netzklemmen eine fast rein sinusförmige Spannung ansteht, die sich bei richtiger Phasenlage ohne weiteres in das Netz rückspeisen läßt. Diese Wechselstrommaschinen ermöglichen die Einsparung eines halbleitergesteuerten Wechselrichters, dessen Ausgangsspannung bei vertretbarem Aufwand an Siebschaltmitteln erhebliche Schaltspitzen aufweist, die, wenn sie ins Stromnetz gelangen, zu er heblichen Störungen führen können und deswegen von den EVUs nicht gestattet werden. In jedem Falle wird durch die Verwendung von Synchron- oder Asynchronmaschinen als Elektromotor für die Prüfeinrichtung eine aufwendige Halbleiterelektronik eingespart, wenn die aus diesen Maschinen gewonnene Generatorspannung ins Netz zurückgespeist werden soll.

Im Falle eines Gleichspannungsnetzes ist es auch möglich, als Elektromotor in der Prüfeinrichtung eine Gleichstrommaschine mit Nebenschlußcharakteristik zu verwenden, die durch das vorgeschaltete Getriebe in ihrem günstigsten Drehzahlbereich gehalten werden kann und durch Veränderung des Übersetzungsverhältnisses ohne weiteres jederzeit zwischen Motor-und Generatorbetrieb hin-und hergefahren werden kann, um einen Schiebelauf zu simulieren.

In der Zeichnung sind Ausführungsbeispiele des Gegenstandes der Erfindung dargestellt. Es zeigen:

Fig. 1 eine Prüfeinrichtung gemäß der Erfindung in einer schematisierten Darstellung und

Fig. 2 eine Abwandlung des hydrostatischen Getriebes für die Prüfeinrichtung nach Fig. 1.

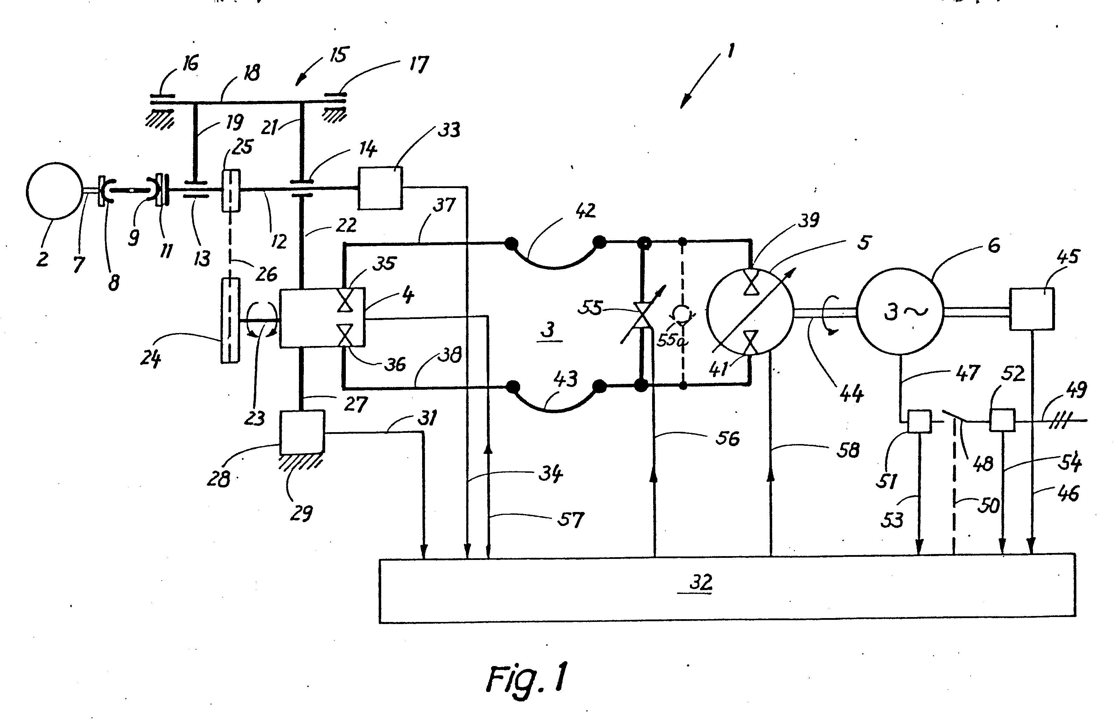

In Fig. 1 ist ein Prüfstand 1 zum Prüfen eines Motors, beispielsweise eines Verbrennungsmotors 2 veranschaulicht, um dessen Betriebsverhalten zu ermitteln. Der Prüfstand 1 ist stark schematisiert veranschaulicht und enthält ein mit dem Verbrennungsmotor 2 drehfest kuppelbares hydrostatisches Getriebe 3 mit zwei verstellbaren Pumpenmotoren 4 und 5, von denen der Pumpenmotor 5 eine Wechselstrommaschine in Form einer Dreiphasensynchron-oder Dreiphasenasynchronmaschine 6 antreibt. Das hydrostatische Getriebe gestattet eine Übersetzung ins Schnelle oder ins Langsame.

Im einzelnen ist eine Ausgangwelle 7 des Verbrennungsmotors 2 über eine Zwischenwelle mit zwei Universalgelenken 8 und 9 mit der Eingangsseite einer Trennkupplung 11 verbunden, deren Ausgangsseite drehfest auf einer Vorgelegewelle 12 sitzt. Die Vorgelegewelle 12 ist drehbar in zwei Lagern 13 und 14 gelagert, die zu einer Halterung 15 gehören. Die Halterung 15 enthält eine in ortsfesten Schwenklagern 16 und 17 schwenkbar gelaerte Achse 18, an der mit Abstand voneinander zwei Stege 19 und 21 drehfest und starr angebracht sind. Der Steg 19 trägt an seinem freien, von der Achse 18 abgelegen Ende das Drehlager 13, während der Steg 21 das Drehlager 14 haltert und sich über das Drehlager 14 bei 22 hinaus erstreckt. Die Anordnung der Lager 13 und 14 zu der Schwenkachse 18 ist so getroffen, daß die Vorgelegewelle 12 achsparallel unterhalb der Schwenkachse 18 verläuft. Die Vorgelegewelle 12 erstreckt sich etwa in Verlängerung der Ausgangswelle 7 des Prüflings 2, um unnötige Abwinkelungen in den Universalgelenken 8 und 9 zu vermeiden.

An dem mit der Schwenkachse 18 verbundenen Steg 21 ist im Bereich von dessen über das Lager 14 hinausreichenden Verlängerung 22 der verstellbare und nur schematisch gezeigte Pumpenmotor 4 darunter starr befestigt.

Seine Eingangswelle 23 verläuft ebenfalls achsparallel zu der Welle 12 und damit auch achsparallel zu der Schwenkachse 18. Auf dem freien Ende der Eingangswelle 23 sitzt drehfest ein Zahnrad oder, wie gezeigt, eine Riemenscheibe 24, die mit einem auf der Vorgelegewelle 12 drehfest sitzenden Vorgelegerad 25 über einen Endlosriemen 26 gekuppelt ist.

In Verlängerung des Stegabschnittes 22 befindet sich ein starrer Betätigungsarm 27, dessen unteres freies Ende mit einem Betätigungsorgan, einer elektrischen Kraftmeßdose 28, in Eingriff steht. Die Kraftmeßdose 28 ist bei 29 ortsfest gehaltert und über eine Verbindungsleitung 31 mit einer Steuer-und Recheneinheit 32 verbunden. Mit Hilfe der Kraftmeßdose 28 läßt sich aufgrund der bekannten und starren Hebelarmverhältnisse zwischen der Schwenkachse 18 und der Vorgelegewelle 12 bzw. dem Abstand zwischen der Schwenkachse 18 und der Eingangswelle 23 sowie dem Abstand zwischen der Schwenkachse 18 zu der Kraftmeßdose 28 einerseits und den Rückstellkräften andererseits das an der Kupplung 11 von dem Prüfling 2 auf dem Pumpenmotor 4 bzw. umgekehrt übertragene Drehmoment ermitteln.

Für eine Leistungsmessung ist außerdem mit der Vorgelegewelle 12 ein Drehzahlmesser 33 drehfest verbunden, der über elektrische Verbindungsleitungen 34 ebenfalls an die Steuer-und Recheneinheit angeschlossen ist.

Der verstellbare Pumpenmotor 4 ist mit seinen beiden Hydraulikanschlüssen 35 und 36 über biegsame Hydraulikleitungen 37 und 38 an die beiden Hydraulikanschlüsse 39 und 41 des verstellbaren Pumpenmotors 5 angeschlossen, so daß sich ein Hydraulikkreislauf zwischen den beiden Pumpenmotoren 4 und 5 ergibt.

Die zum Betrieb des hydrostatischen Getriebes 3 erforderlichen Hilfseinrichtungen, wie Kühler, Füllpumpe, Ölsumpf, Sicherungseinrichtungen u.dgl. sind an sich bekannt und deswegen aus Übersichtlichkeitsgründen nicht dargestellt, denn sie haben mit der eigentlichen Erfindung an sich nichts zu tun.

Die biegsamen Hydraulikleitungen 37 und 38, was durch die Schlauchverbindungen 42 und 43 - schematisch angedeutet ist, sind erforderlich, da der Pumpenmotor 5 ortsfest aufgestellt ist. Die Hydraulikverbindungen zwischen den beiden Pumpenmotoren 4 und 5 sind so auszuführen, daß sie unter Druck nicht die von dem Prüfling 2 auf den Pumpenmotor 4 übertragene Kraft scheinbar vergrößern oder verkleinern, was zu einer Fehlmessung an der Kraftmeßdose 28 führen würde.

Mit seiner Ausgangswelle 44 arbeitet der Pumpenmotor 5 auf die drehfest mit ihm gekuppelte dreiphasige Wechselstrommaschine, die entweder eine Asynchron-oder eine Synchronmaschine ist. Mit dieser Wechselstrommaschine 6 ist ein Drehzahlmesser 45 verbunden, der ebenfalls an die Steuer-und Recheneinheit über eine elektrische Verbindung 46 angeschlossen ist. Die Wechselstrommaschine 6 ist ebenfalls ortsfest angebracht.

Schließlich ist die Wechselstrommaschine 6 über elektrische Leitungen 47 sowie ein Schütz 48, das über eine Steuerleitung 50 von der Steuer-und Recheneinheit 32 betätigbar ist, an ein Dreiphasenstromversorgungsnetz 49 anschaltbar. Um im Betriebsfall ein frequenz-und phasenrichtiges Anschalten der Wechselstrommaschine 6 an das Netz 49 zu gewährleisten, ist auf beiden Seiten des Schütz 48 eine Phasenmeßeinrichtung 51 und 52 vorgesehen, die ebenfalls über Meßleitungen 53 und 54 an die Steuer-und Recheneinheit 32 angeschlossen ist.

Um das Anfahren des Prüfstandes zu erleichtern, sind die beiden Hydraulikleitungen 37 und 38 miteinander über ein stetig steuerbares Absperrventil 55 verbunden, das im geöffneten Zustand einen hydraulischen Kurzschluß für beide Pumpenmotoren 4 und 5 bildet, damit keine unerwünschten Übersetzungsverhältnisse während des Einstellens zustandekommen. Die Steuerung des absperrbaren Ventils 55 erfolgt über eine Steuerleitung 56, die das Steuerglied des absperrbaren Ventils 55 mit der Steuer-und Recheneinheit 32 verbindet.

Die Steuer-und Recheneinheit 32 bewirkt auch über Steuerleitungen 57 und 58, die zu den Stellorganen der beiden verstellbaren Pumpenmotoren 4 und 5 führen, die Einstellung von deren Schluck-bzw. Fördervolumen.

Die Betriebsweise des gezeigten Prüfstandes 1 ist wie folgt: Es sei zunächst angenommen, daß die Wechselstrommaschine 6 infolge des von der Steuer-und Recheneinheit 32 geschlossenen Schützes 48 an das Stromnetz 49 angeschaltet ist, und zwar nach Durchlaufen einer Anlaßprozedur, wie sie für das Anlassen elektrischer Maschinen großer Leistung bekannt ist. Die elektrische Maschine 6 läuft deshalb mit ihrer synchronen Drehzahl, beispielsweise 3.000 Umdrehungen pro Minute. Auch der Prüfling 2 in Gestalt der Brennkraftmaschine sei angelassen und läuft mit einer Leerlaufdrehzahl von ca. 600 bis 900 Umdrehungen pro Minute. Bei eingelegter Kupplung 11 läuft damit die Eingangswelle 23 des Pumpenmotors 4 mit einer Drehzahl, die dem Übersetzungsverhältnis zwischen den beiden Riemenscheiben 25 und 24 entspricht. Da das Übersetzungsverhältnis bekannt ist und sowohl die Drehzahl der elektrischen Maschine 6 mit Hilfe des Drehzahlmessers 45 als auch die Drehzahl der Vorgelegewelle 12 mit Hilfe des Drehzahlmessers 33 gemessen wird, kann die Steuer- und Recheneinheit 32 aus diesen Werten unter Berücksichtigung des Übersetzungsverhältnisses das notwendige Übersetzungsverhältnis für das hydrostatische Getriebe 3 berechnen, das notwendig ist, damit die Leerlaufdrehzahl des Prüflings 2 in die Synchrondrehzahl der elektrischen Maschine 6 umgesetzt wird, und zwar so, daß die in der Einrichtung auftretenden mechanischen und hydraulischen Verluste von der elektrischen Maschine 6 gedeckt werden. Die Kraftmeßdose 28 wird in einem solchen Fall keine Auslenkkraft messen.

Nach Berechnung dieses Nennübersetzungsverhältnisses stellt die Steuer- und Recheneinheit 32 einen oder beide verstellbare Pumpenmotoren 4 und 5 entsprechend ein, wobei bei der Einstellung des Förder-bzw. Schluckvolumens möglichst in Richtung auf einen günstigen Getriebewirkungsgrad optimiert wird.

Während der gesamten Zeit wurde bislang das steuerbare Absperrventil 55 von der Steuer-und Recheneinheit 32 in der geöffneten Stellung gehalten, so daß bei der Verstellung des hydrostatischen Getriebes 3 keine gefährlichen Betriebszustände auftreten können. Nach Einstellen des gewünschten berechneten Übersetzungsverhältnisses - schließt die Steuer-und Recheneinheit das absperrbare Ventil 55 und überwacht eventuell auftretende Drehzahl-oder Drehmomentänderungen. Treten diese auf, so stellt sie das Übersetzungsverhältnis des hydrostatischen Getriebes 3 nach.

Sobald das Ventil 55 vollständig geschlossen ist, kann die Drehzahl des Prüflings 2 allmählich von der Leerlaufdrehzahl auf die Prüfdrehzahl gesteigert werden, wobei die Steuer-und Recheneinheit 32 aufgrund der über den Drehzahlmesser 33 gemessenen Drehzahlerhöhung das Übersetzungsverhältnis des hydrostatischen Getriebes 3 durch Verstellen eines oder beider Pumpenmotoren 4 und 5 so nachregelt, daß die Synchrondrehzahl bzw. Betriebsdrehzahl der elektrischen Maschine 6 erhalten bleibt.

Ausgehend von diesem Übersetzungsverhältnis, das zu der Prüfdrehzahl des Prüflings 2 und der Betriebsdrehzahl der elektrischen Maschine 6 gehört, kann nun durch Erhöhen oder Verringern des Übersetzungsverhältnisses entweder der Prüfling 2 durch die elektrische Maschine 6 belastet oder durch die elektrische Maschine 6 angetrieben werden. Ist das Übersetzungsverhältnis in der einen Richtung verändert, dann liefert der Verbrennungsmotor bzw. Prüfling 2 mechanische Leistung in den Prüfstand 1, die dort von der elektrischen Maschine 6 in elektrische Leistung mit einer Spannung und Frequenz umgesetzt wird, die gleich der Frequenz und der Spannung in dem Stromnetz 49 sind, und zwar ohne daß zusätzliche Wandlereinrichtungen notwendig sind. Die abgegebene Spannung hat fast rein sinusförmigen Verlauf und führt zu keinerlei Störungen im Stromnetz. Wie groß die in das Stromnetz zurückgespeiste elektrische Leistung ist, hängt von dem Wirkungsgrad der Anlage und der von dem Prüfling 2 abgegebenen Leistung ab. Eine solche Betriebssituation simuliert bei einem Verbrennungsmotor beispielsweise das Bergauffahren oder das Fahren mit großer Geschwindigkeit in der Ebene. Welche Leistung dabei von dem Motor abgegeben wird, läßt sich mit Hilfe der von der Drehzahlmeßeinrichtung 33 gemessenen Drehzahl und der von der Kraftmeßdose 28 gemessenen Kraft ermitteln, die dadurch entsteht, daß der Pumpenmotor 4, der von dem Pumpenmotor 5 und der damit gekuppelten elektrischen Maschine gebremst wird, auf den Steg 21 ein Reaktionsdrehmoment bezüglich der Schwenkachse 18 ausübt.

Wenn umgekehrt das Verhalten des Prüflings 2 im getriebenen Zustand ermittelt werden soll, wird von der Steuer-und Recheneinheit 32 das Übersetzungsverhältnis in der anderen Richtung verändert, so daß jetzt die elektrische Maschine 6, die nach wie vor im Nenndrehzahlbereich bzw. mit der Synchrondrehzahl läuft, elektrische Leistung dem Netz 49 entnimmt, in mechanische Leistung umsetzt und die mechanische Leistung mit der richtigen Drehzahl über das verstellbare hydrostatische Getriebe 3 in den Prüfling 2 einspeist.

Auch hier läßt sich wiederum die vom Motor 2 aufgenommene mechanische Leistung aus der Drehzahl der Vorgelegewelle 12 und der von der Kraftmeßdose 28 gemessenen Kraft ermitteln.

Die gezeigte Anordnung gestattet es, auch einen schnellen Wechsel zwischen Last-und Schiebelauf des Prüflings 2 zu simulieren, womit ohne weiteres jede Betriebssituation einstellbar ist.

Mit der dargestellten Anordnung ist es ohne weiteres möglich, ohne Zuhilfenahme anderer Schaltmittel die elektrische Maschine 6 anzulassen und mit dem Netz zu synchronisieren. In diesem Fall wird so vorgegangen, daß zunächst die Steuer- und Recheneinheit 32 bei geöffnetem Schütz 48 das Ventil 55 öffnet. Nach Starten des Prüflings 2 beginnt der Pumpenmotor 4 zu laufen, wenn die Trennkupplung 11 eingelegt ist, während der Pumpenmotor 5 noch steht. Anschließend wird der Prüfling 2 auf eine geeignete, über der Leerlaufdrehzahl liegende Drehzahl beschleunigt und die Steuer-und Recheneinheit 32 stellt den Pumpenmotor 4 auf Fördervolumen null und den Pumpenmotor 5 auf sein größtes Schluckvolumen ein. Wenn jetzt von der Steuer-und Recheneinheit 32 das Absperrventil 55 geschlossen wird, kann durch allmähliche Verstellung des Pumpenmotors 4 mechanische Leistung auf den Pumpenmotor 5 übertragen werden, wodurch aus dem Stillstand die elektrische Maschine 6 hochgeschleunigt wird. Dabei überwacht die Steuer-und Recheneinheit 32 bei einer Synchronmaschine mittels der Phasenmeßeinrichtungen 51 und 52 die Phasenlage zwischen der Netzspannung und der von der elektrischen Maschine 6 abgegebenen Spannung bzw. bei einer Asynchronmaschine deren Drehzahl mittels der Drehzahlmeßeinrichtung 45. Sobald im Verlaufe des Verstellens des Pumpenmotors 4 die elektrische Maschine 6 die richtige Drehzahl erreicht hat, und auch die von ihr abgegebene Spannung mit der Netzspannung synchron ist, schließt die Steuer-und Recheneinheit 32 den Schütz 48, womit die oben erläuterte Betriebssituation erreicht ist.

Falls der Verstellhub des Pumpenmotors 4 nicht ausreicht, um bei der gegebenen Drehzahl des Prüflings 2 die elektrische Maschine 6 auf Synchrondrehzahl bzw. Betriebsdrehzahl zu beschleunigen, steuert die Steuer-und Recheneinheit 32 nach Erreichen der maximalen Verstellung des Pumpenmotors 4 den Pumpenmotor 5 in Richtung auf eine Verkleinerung des Schluckvolumens, was zu einer weiteren Erhöhung der Drehzahl der Ausgangswelle 44 beiträgt.

Umgekehrt ist es auch möglich, mit Hilfe der elektrischen Maschine 6 den Prüfling 2 zu starten, wobei die Steuer-und Recheneinheit 32 die einzelnen Elemente sinngemäß in umgekehrter Richtung betätigt, d.h. in diesem Falle wird der Pumpenmotor 5 auf kleinstes Fördervolumen und der Pumpenmotor 4 auf größtes Schluckvolumen eingestellt.

Durch die Verwendung des hydrostatischen Getriebes 3 können bei entsprechender Auslegung der beiden Pumpenmotoren 4 und 5 auch unterschiedliche Drehrichtungen berücksichtigt werden, d.h. bei gegebener Drehrichtung der elektrischen Maschine können sowohl links-als auch rechtslaufende Prüflinge ohne weiteres ausgemessen werden. Es ist nur notwendig, die beiden Pumpenmotoren 4 und 5 dann in der entsprechenden gegensinnigen Weise zu verstellen.

Wie sich aus dem Obigen ergibt, hat das Ventil 55 mehrere Funktionen. Es dient als einfache Sicherungsmaßnahme, die unabhängig von den Einstellverhältnissen an den beiden Pumpenmotoren verhindert, daß die eine Maschine durch die andere Maschine angetrieben werden kann. Das geöffnete Ventil 55 wirkt insoweit wie eine Trennkupplung, die die Antriebsseite von der Abtriebsseite abtrennt, die bei dem Motorenprüfstand 1 je nach Betriebsverhältnissen miteinander zu vertauschen sind. Wegen dieser Kupplungswirkung des Ventils 55 können auch unabhängig voneinander die beiden Maschinen, nämlich der Prüfling 2 und die elektrische Maschine 6 auf die jeweils gewünschte Drehzahl gebracht werden, ehe sie miteinander gekuppelt werden. Dabei kann jede Maschine den ihr zugehörigen Pumpenmotor 4, 5 antreiben, was Drehzahlsprünge vermeidet, die auftreten würden, wenn zu diesem Zweck mit Hilfe einer mechanischen Trennkupplung eine der Maschinen , 6 von dem zugehörigen Pumpenmotor 4, 5 abgekuppelt wäre. Selbst bei Fehlsteuerungen am Prüfling 2 können sofort gefährliche Betriebszustände durch Öffnen des Ventiles 55 beseitigt werden. Da das Ventil 55 stetig regelbar ist, kann es auch als gesteuerter Bypass wirken, der beim Anlassen des Prüflings 2 durch die elektrische Maschine 6 allmählich die Leistung auf den Prüfling 2 aufschaltet bzw. umgekehrt beim Anlassen der elektrischen Maschine 6 durch den Prüfling 2 allmählich die Leistung auf die elektrische Maschine aufschaltet. Dies kann wiederum weitgehend unabhängig von der anfänglichen Einstellung der Pumpenmotoren 4, 5 geschehen, womit auf einfache Weise eine gleichzeitige Anpassung des Übersetzungsverhältnisses möglich wird.

Mit Hilfe des Ventils 55 ist es auch möglich, bei sonst fast gleichem Verhalten ein vereinfachtes hydrostatisches Getriebe 3 aufzubauen, bei dem nur der eine Pumpenmotor verstellbar ist.

Vorteilhafterweise ist dem Ventil 55 noch ein selbsttätig wirkendes Rückschlagventil zugeordnet, um einen Leistungsfluß in der unerwünschten Richtung innerhalb des hydrostatischen Getriebes 3 selbsttätig zu unterdrücken. Ein solches Ventil ist in Fig. 1 mit 55a gestrichelt veranschaulicht.

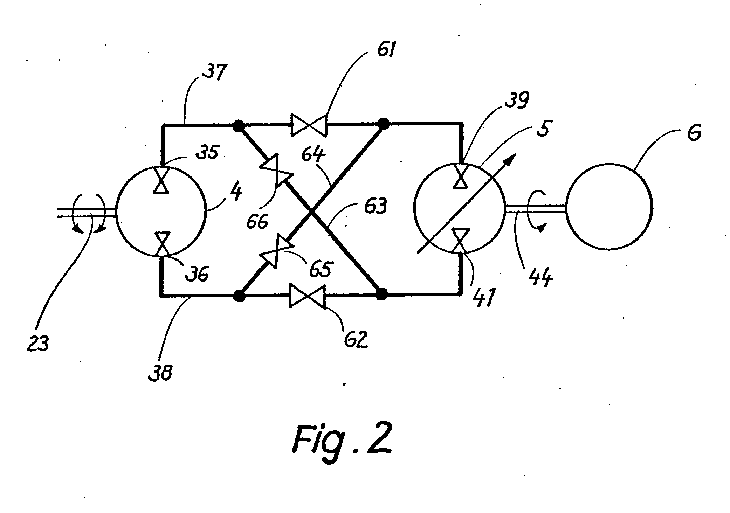

Falls keiner der beiden Pumpenmotoren 4 und 5 über den Nullpunkt hinaus im Sinne einer Umkehrung der Drehrichtung verstellbar ist, ist es ohne weiteres möglich, zum Prüfen von Prüflingen unterschiedlicher Drehrichtung die hydraulische Schaltung nach Fig. 2 zwischen den beiden Pumpenmotoren 4 und 5 zu verwenden. In die beiden Hydraulikleitungen 37 und 38 werden hierbei zwei steuerbare absperrbare Ventile 61 und 62 gelegt, deren Betätigung ebenfalls von der zentralen Steuer-und Recheneinheit 32 über nicht weiter veranschaulichte Steuerleitungen erfolgt. Außerdem sind die beiden Hydraulikleitungen 37 und 38, wie gezeigt, durch weitere Leitungen 63 und 64 über Kreuz miteinander verbunden, wobei diese Zusatzleitungen 63 und 64 ebenfalls steuerbare absperrbare Ventile 65 und 66 enthalten. Die Ventile 65 und 66 werden wiederum von der Steuer-und Recheneinheit 32 über nicht gezeigte Steuerleitungen betätigt.

. Auf diese Weise ist es möglich, durch Öffnen der Ventile 61 und 62 und Schließen der Ventile 65 und 66 das eine Drehrichtungsverhältnis zwischen den beiden Wellen 43 und 44 herzustellen, während durch Schließen der Ventile 61 und 62 und Öffnen der Ventile 65 und 66 das umgekehrte Drehrichtungsverhältnis zwischen den Wellen 23 und 44 zu erzeugen ist, ohne daß die beiden Pumpenmotoren 4 und 5 verstellt werden müssen. Dabei können die Ventile 61, 62 bzw. 65, 66 gleichzeitig die Funktion des im Bypass liegenden Absperrventils 55 übernehmen oder es kann, wie gezeigt, zusätzlich noch dieses Bypassventil vorgesehen sein.

Obwohl die Erfindung anhand der Verwendung einer Wechselstrommaschine erläutert ist, ist ohne weiteres zu erkennen, daß bei einem Gleichstromnetz anstelle der Wechselstrommaschine 6 auch eine Gleichstrommaschine verwendet werden kann, die Nebenschlußcharakteristik aufweist und deshalb sowohl als Generator als auch als Motor laufen kann. In diesem Falle erübrigen sich die Vorrichtungen zur Phasenmessung und es genügt, beim Anlassen der elektrischen Maschine 6 durch den Prüfling 2 die Ausgangsspannung der elektrischen Maschine vor dem Schließen des Schützes 48 zu überwachen.

Im übrigen kann die Trennkupplung 11 bei entsprechender Auslegung, beispielsweise als Reibscheibenkupplung, dazu verwendet werden, den Prüfling 2 auf die entsprechende Nenndrehzahl zu beschleunigen oder zu verzögern, wenn sie allmählich eingekuppelt wird. Ein solches Verhalten ist von Vorteil, wenn für das Getriebe 3 nicht, wie gezeigt, ein hydrostatisches Getriebe zur Anwendung kommt, sondern beispielsweise ein stufenlos verstellbares Keilriemengetriebe, das naturgemäß einen kleineren Verstellbereich aufweist und insbesondere nicht bis zum Übersetzungsverhältnis null verstellt werden kann. Darüber hinaus kommen hierzu auch stufenweise verstellbare Getriebe in Frage, um bei gegebenem maximalen Verstellbereich des Keilriemengetriebes oder des hydrostatischen Getriebes eine noch größere Drehzahlvariation zwischen der Eingangswelle des Prüfstandes 1 und der Welle der elektrischen Maschine 6 zu erreichen.

## Ansprüche

1. Prüfeinrichtung zum Prüfen von umlaufenden Kraft-und Arbeitsmaschinen sowie Teilen davon wie Motoren, insbesondere Verbrennungsmotoren, und zum Ermitteln von deren Betriebsverhalten, mit einer an ein Stromnetz anschließbaren und sowohl im Motorbetrieb als auch im Generatorbetrieb betreibbaren elektrischen Maschine (6), mit einem im Übersetzungsverhältnis verstellbaren Getriebe (3), dessen Eingangswelle (23) mit einer Ausgangswelle (7) des Prüflings (2) und dessen Ausgangswelle (44) mit der Ankerwelle der elektrischen Maschine (6) gekuppelt ist.

2. Prüfeinrichtung nach Anspruch 1, dadurch gekennzeichnet, daß das Getriebe (3) zumindest in einem Übersetzungsbereich stufenlos verstellbar ist.

3. Prüfeinrichtung nach Anspruch 1, dadurch gekennzeichnet, daß das Getriebe (3) ein hydrostatisches Getriebe ist.

4. Prüfeinrichtung nach Anspruch 3, dadurch gekennzeichnet, daß das hydrostatische Getriebe zwei verstellbare Pumpenmotoren (4, 5) aufweist.

5. Prüfeinrichtung nach Anspruch 3, dadurch gekennzeichnet, daß lediglich einer, vorzugsweise der mit der elektrischen Maschine (6) gekuppelte Pumpenmotor (5) verstellbar ist.

6. Prüfeinrichtung nach Anspruch 1, dadurch gekennzeichnet, daß in dem Strang zwischen dem Prüfling (2) und der elektrischen Maschine (6) eine zeitweise schlupfaufnehmende Kupplung (11, 55) angeordnet ist, über die wahlweise der Prüfling (2) an die elektrische Maschine (6) an-bzw. abkuppelbar ist.

7. Prüfeinrichtung nach Anspruch 1, dadurch gekennzeichnet, daß die Drehmomentmeßeinrichtung eine schwenkbar gelagerte Halterung (18, 19, 21, 22) aufweist, die elastisch in ihre Nullage vorgespannt ist und deren Schwenkachse (18) im wesentlichen parallel zu der Ausgangswelle (7) des Prüflings (2) verläuft, daß in der Halterung (18, 19, 21) zumindest der mit der Ausgangswelle (7) unmittelbar gekuppelte Teil (24, 25, 4) des Getriebes (3) angeordnet ist, und daß eine eine Auslenkung oder Auslenkkraft der Halterung (18, 19, 21) messende Meßeinrichtung (28, 32) vorgesehen ist.

8. Prüfeinrichtung nach Anspruch 7, dadurch gekennzeichnet, daß der in der Halterung (18, 19, 21) angeordnete Teil (4, 24, 25) des Getriebes (3) der mit dem Prüfling (2) drehfest gekuppelte Pumpenmotor (4) ist.

9. Prüfeinrichtung nach Anspruch 7, dadurch gekennzeichnet, daß dem hydrostatischen Getriebe (3) ein Vorgelegegetriebe (24, 25) vorgeschaltet ist, das ebenfalls in der Halterung (18, 19, 21) angeordnet ist.

10. Prüfeinrichtung nach den Ansprüchen 3 und 6, dadurch gekennzeichnet, daß die beiden Pumpenmotoren (4, 5) über zwei Hydraulikleitungen (37, 38) miteinander verbunden sind, die über ein verstellbares, die zeitweise schlupfaufnehmende Kupplung bildendes Ventil (55) miteinander strömungsmäßig verbindbar sind, derart, daß ein Bypass zu den Pumpenmotoren (4, 5) zu öffnen oder zu schließen ist.

11. Prüfeinrichtung nach Anspruch 3, dadurch gekennzeichnet, daß die beiden Pumpenmotoren (4, 5) über zwei Hydraulikleitungen (37, 38) direkt und über zwei weitere Hydraulikleitungen (63, 64) über Kreuz miteinander verbunden sind, wobei in jeder der Hydraulikleitungen ein wahlweise absperrbares Ventil (61, 62, 65, 66) liegt, derart, daß entsprechend der Betätigung der Ventile (61, 62, 65, 66) das Drehrichtungsverhältnis zwischen den beiden Pumpenmotoren (4, 5) ohne deren Verstellung umkehrbar ist.

12. Prüfeinrichtung nach Anspruch 1, dadurch gekennzeichnet, daß die elektrische Maschine (6) eine Wechselstrommaschine ist.

13. Prüfeinrichtung nach Anspruch 12, dadurch gekennzeichnet, daß die Wechselstrommaschine (6) eine Dreiphasenasynchronmaschine ist.

14. Prüfeinrichtung nach Anspruch 12, dadurch gekennzeichnet, daß die elektrische Maschine (6) eine Synchron-vorzugsweise eine Dreiphasensynchronmaschine ist.

15. Prüfeinrichtung nach Anspruch 1, dadurch gekennzeichnet, daß die elektrische Maschine (6) ein Gleichstrommotor mit Nebenschlußcharakteristik ist.

16. Prüfeinrichtung nach Anspruch 1, dadurch gekennzeichnet, daß eine Steuereinrichtung (32) zur Steuerung des Übersetzungsverhältnisses des Getriebes zur Einstellung der Lastsituation des Pruflings (2) vorgesehen ist.

17. Prüfeinrichtung nach Anspruch 1, dadurch gekennzeichnet, daß eine Drehmomentmeßeinrichtung (28, 32) zur Ermittlung des von dem Prüfling (2) an seiner Ausgangswelle (7) abgegebenen oder aufgenommenen Drehmoments vorgesehen ist.

18. Prüfeinrichtung nach Anspruch 1, dadurch gekennzeichnet, daß zum Steuern und Verstellen des Übersetzungsverhältnisses des verstellbaren Getriebes (3) eine zentrale Steuer-und Recheneinheit (32) vorgesehen ist, die zumindest eine Meßeinrichtung (33) zum Messen der Drehzahl des Prüflings (2) zugeordnet ist.

19. Prüfeinrichtung nach Anspruch 18, dadurch gekennzeichnet, daß an die zentrale Steuer-und Recheneinheit (32) eine eine Auslenkung oder Auslenkkraft eines Teils (4) des hydrostatischen Getriebes (3) messende Meßeinrichtung (28) angeschlossen ist.

20. Prüfeinrichtung nach Anspruch 1, dadurch gekennzeichnet, daß zwischen der elektrischen Maschine (6) und einem Stromversorgungsnetz (49) eine steuerbare Schalteinrichtung (48) geschaltet ist, die durch eine zugeordnete Steuereinheit (32) betätigbar ist, und daß an die Steuereinheit (32) eine die Phasenlage und/oder die Spannung der von der elektrischen Maschine (6) abgegebenen Spannung messende Einrichtung (51) angeschlossen ist, die die von der elektrischen Maschine (6) abgegebene Spannung nach Amplitude, Frequenz und/oder Phase mit den entsprechenden Parametern des Netzes (49) vergleicht, die über eine zugeordnete Meßeinrichtung (52) gemessen werden, derart, daß die Steuereinheit (32) lediglich bei Übereinstimmung der Parameter die betätigbare Schalteinrichtung schließt.

21. Prüfeinrichtung nach Anspruch 10, dadurch gekennzeichnet, daß dem verstellbaren Ventil (55) ein Rückschlagventil (55a) parallelgeschaltet ist.

Fig.1

Fig.2

0 254 102